# EUROPÄISCHE PATENTSCHRIFT

(11) **EP 4 257 907 B1**
(45) Veröffentlichungstag und Bekanntmachung des Hinweises auf die Patenterteilung: **04.06.2025**
(21) Anmeldenummer: 23193075.1
(22) Anmeldetag: 29.04.2021
(51) Int. Cl.: F24H 3/04, F24H 7/04, H05B 3/24

(54) **HEIZEINRICHTUNG, HEIZSYSTEM, WÄRMESPEICHERVORRICHTUNG UND WÄRMESPEICHERSYSTEM**
HEATING DEVICE, HEATING SYSTEM, HEAT STORAGE DEVICE AND HEAT STORAGE SYSTEM
DISPOSITIF DE CHAUFFAGE, SYSTÈME DE CHAUFFAGE, DISPOSITIF DE STOCKAGE D'ÉNERGIE THERMIQUE ET SYSTÈME DE STOCKAGE D'ÉNERGIE THERMIQUE

(30) Priorität: 04.05.2020 DE 102020111987
(43) Veröffentlichungstag der Anmeldung: 11.10.2023
(62) Teilanmeldung aus: 21725419.2
(73) Patentinhaber: Kraftanlagen Energies & Services SE, 80339 München (DE)
(72) Erfinder: Doerbeck, Till, 80339 München (DE); Herrmann, Jakob, 80339 München (DE); Schwarz, Gerhard, 80339 München (DE)
(74) Vertreter: advotec.

(56) Entgegenhaltungen:
- EP-A1- 3 051 223
- EP-A1- 3 296 660
- EP-A2- 1 130 337
- DE-A1- 102009 045 741
- DE-A1- 19 724 734
- DE-A1- 2 625 515
- DE-A1- 2 652 087

## Beschreibung

Die Erfindung betrifft eine Heizeinrichtung zum Erhitzen eines Gasstroms.

Wärmespeichervorrichtungen werden in der Praxis zum Speichern thermischer Energie eingesetzt, die im Bedarfsfall beispielsweise einem Kraftwerk zur Verfügung gestellt werden kann. Eine bekannte Wärmespeichervorrichtung umfasst einen Speicherraum, in dem ein Wärmespeichermedium in Form einer Schüttung oder auch in Form von Formsteinen angeordnet ist, das zum Beladen mit Heißluft durchströmt wird. Die Heißluft wurde zuvor beispielsweise mittels einer elektrisch betriebenen Heizeinrichtung auf Temperatur gebracht. Hierzu kann überschüssige elektrische Energie eingesetzt werden. Die Effizienz einer solchen Heizeinrichtung erfüllt aber bisher nicht höchste Ansprüche. Zum Entladen, das heißt zum Abführen der Wärme, wird das Wärmespeichermedium mit Warmluft oder Umgebungsluft durchströmt, die in dem Wärmespeichermedium aufgeheizt und in erhitzter Form einem Verbraucher, beispielsweise einem Dampferzeuger einer Turbine zugeführt wird.

Aus der Druckschrift DE 26 25 515 A1 ist eine Heizeinrichtung mit den Merkmalen des Oberbegriffs des Patentanspruchs 1 bekannt. Diese Heizeinrichtung umfasst als Schienen ausgebildete Anschlusselemente zur Verbindung mit einer Stromquelle und eine Heizblecheinheit mit mehreren Heizblechen, die über die Schienen miteinander verbunden sind. An den Schienen können Strukturen ausgeformt sein, die den Abstand zwischen den Heizblechen definieren.

Der Erfindung liegt die Aufgabe zugrunde, eine Heizeinrichtung zum Erhitzen eines Gasstroms, die eine hohe Heizleistung hat, zu schaffen.

Diese Aufgabe ist erfindungsgemäß durch die Heizeinrichtung mit den Merkmalen des Anspruchs 1 gelöst.

Erfindungsgemäß wird also eine Heizeinrichtung zum Erhitzen eines Gasstroms bereitgestellt, die zwei elektrische Anschlusselemente zur Verbindung mit einer Stromquelle und mindestens eine Heizblecheinheit mit einer Einströmseite und einer Ausströmseite umfasst, die eine Vielzahl von Heizblechstreifen umfasst, welche in dem Gasstrom liegen und jeweils einen ersten Endbereich und einen zweiten Endbereich aufweisen, wobei benachbarte Heizblechstreifen in den ersten Endbereichen und den zweiten Endbereichen jeweils über eine leitfähige Abstandshalterstruktur miteinander verbunden sind.

Die Heizeinrichtung nach der Erfindung umfasst also eine Vielzahl an Heizblechstreifen, die nebeneinander oder übereinander angeordnet sind und an ihren Endbereichen zur Schaffung der Heizblecheinheit bzw. eines Heizblechpakets miteinander verfügt sind, und zwar über die leitfähige Abstandshalterstruktur. Die Heizblechstreifen des Heizblechpakets sind im elektrischen Sinne parallel geschaltet.

Der Begriff "Heizblechstreifen" ist im vorliegenden Fall in seiner vollen Breite zu verstehen und umfasst sowohl längliche metallische Bleche als auch längliche leitfähige keramische Schichten, welche in ihren Endbereichen über die leitfähige Abstandshalterstruktur miteinander verbunden sind.

Die Heizblechstreifen einer Heizblecheinheit stellen eine große Oberfläche zur Wärmeübertragung zwischen der Heizeinrichtung und dem Gasstrom bereit. Es ergibt sich ein großer anströmbarer Gesamtquerschnitt, wobei gleichzeitig aufgrund der parallelen Ausrichtung der Heizbleche gegenüber der Richtung des Gasstroms ein geringer Strömungswiderstand vorliegt und große Durchströmungsgeschwindigkeiten möglich sind. Damit ergeben sich im Betrieb technisch günstige, niedrige Materialtemperaturen an den Blechstreifen bei gleichzeitig hoher Heizleistung.

Bei einer speziellen Ausführungsform der Heizeinrichtung nach der Erfindung sind die Heizblechstreifen der Heizblecheinheit abwechselnd strukturiert und eben. Die strukturierten Heizblechstreifen haben als Strukturierung insbesondere eine Wellung und bilden zusammen mit den ebenen Heizblechstreifen eine Art Wabenstruktur aus, die von dem Gasstrom durchströmbar ist. Denkbar ist es auch, dass die Heizblecheinheit lediglich gewellte oder lediglich ebene Heizblechstreifen umfasst.

Des Weiteren ist es für die Eigenstabilität der Heizblecheinheit vorteilhaft, wenn sich die gewellten Heizblechstreifen mit ihren Wellenkämmen an mindestens einem benachbarten ebenen Heizblechstreifen abstützen.

Die Heizblechstreifen können eine glatte oder auch eine fein strukturierte Oberfläche haben.

Die Abstandshalterstruktur der Heizeinrichtung nach der Erfindung umfasst so genannte Futterbleche, die zwischen benachbarten Heizblechstreifen angeordnet sind und diese miteinander verbinden. Die Futterbleche dienen dazu, dass zumindest die ebenen Heizblechstreifen eine parallele Ausrichtung zueinander haben; sie bilden also Distanzbleche, die die Endbereiche benachbarter Heizblechstreifen auf Abstand halten.

Damit auch die Endbereiche der strukturierten und hierzu insbesondere gewellten Heizblechstreifen parallel zu den Endbereichen der ebenen Heizblechstreifen ausgerichtet sind, haben die Futterbleche eine Dicke, die im Wesentlichen der Amplitude der Wellung entspricht. Die Verbindung zwischen den Heizblechstreifen und den Futterblechen kann nach konventionellen Verbindungsverfahren hergestellt sein; beispielsweise sind die Heizblechstreifen und die Futterbleche in den beiden Endbereichen jeweils miteinander verschweißt, verlötet und/oder vernietet.

Eine bevorzugte Ausführungsform einer erfindungsgemäßen Heizeinrichtung, die einen großen Strömungsquerschnitt bereitstellen kann, umfasst mindestens zwei Heizblecheinheiten, zwischen denen eine elektrisch isolierende Trennwand angeordnet ist, die vorzugsweise aus einer Keramik gebildet ist. Vorzugsweise sind auch mehr als zwei, beispielsweise sechs Heizblecheinheiten vorgesehen, die mäanderartig in Reihe geschaltet sein können.

Die beiden Heizblecheinheiten sind vorzugsweise in Reihe geschaltet, können aber auch parallel geschaltet sein. Des Weiteren sind die beiden Heizblecheinheiten vorzugsweise über ein Kontaktblech miteinander verbunden, das insbesondere stirnseitig an den miteinander verbundenen Heizblecheinheiten anliegt.

Das Kontaktblech, das die beiden nebeneinanderliegenden Heizblechstapel miteinander verbindet, ist vorzugsweise mit den Heizblechstapeln verschweißt oder verlötet.

Die Heizblecheinheiten, die nebeneinander in der Heizeinrichtung angeordnet sind, stellen insbesondere baugleiche, im Wesentlichen rechteckige Baugruppen dar, die in der Heizeinrichtung mäanderförmig hintereinander angeordnet sind. Die Heizblecheinheiten können auch leicht in eine Richtung gekrümmt sein, um Wärmeausdehnungen definiert aufnehmen zu können. Das gesamte Gebilde hat dann eine zumindest angenähert rechteckige Grundfläche, wobei eine Seite leicht nach innen und eine Seite leicht nach außen gewölbt ist.

Die elektrisch isolierende Trennwand ist insbesondere aus einem keramischen, hochtemperaturbeständigen Werkstoff gebildet. Beispielsweise besteht sie aus einer faserverstärken Keramik oder einem keramischen Gewebe, wobei sie in Form einer Platte oder einer Lochplatte ausgebildet ist.

Bei einer speziellen Ausführungsform ist die Trennwand aus einem Werkstoff gefertigt, der aus einer Keramik auf Cordieritbasis hergestellt ist.

Die Trennwand dient dazu, einen mäanderförmigen Strompfad durch die in Reihe hintereinandergeschalteten Heizblecheinheiten zu gewährleisten.

Die Anschlusselemente der Heizeinrichtung nach der Erfindung sind vorzugsweise ebenfalls jeweils aus einer elektrisch leitenden Platte bzw. einem Blech gebildet. Insbesondere in diesem Falle können sie mit dem Kontaktblech, das zwei Heizblecheinheiten miteinander verbindet, fluchten.

Die Heizeinrichtung nach der Erfindung kann entweder an eine Gleichstrom- oder an eine Wechselstrom-Spannungsquelle angeschlossen werden und kann beispielsweise im Klein-, Nieder- oder Mittelspannungsbereich bei 110 V bis 10 kV Wechselstrom oder bei 12 V bis 1,5 kV Gleichstrom betrieben werden.

Ein nicht von den Ansprüchen erfasstes Heizsystem für einen Gasstrom umfasst eine Einströmseite und eine Ausströmseite sowie eine Heizanordnung, die mindestens eine Heizeinheit aufweist, welche eine Heizeinrichtung mit einer Anströmgrundfläche, die rechtwinkelig zum Gasstrom ausgerichtet ist, und mindestens ein Lagerelement umfasst, auf dem die Heizeinrichtung angeordnet ist und das durchlässig für den Gasstrom ist, so dass die Anströmgrundfläche der Heizeinrichtung von dem Gasstrom anströmbar ist oder der Gasstrom von der Heizeinrichtung durch das Lagerelement strömen kann.

Das Heizsystem umfasst also mindestens eine Heizeinheit, die die Heizeinrichtung und das mindestens eine Lagerelement umfasst, auf dem die Heizeinrichtung angeordnet ist. Die Heizeinrichtung definiert mit ihrer Grundfläche den Strömungsquerschnitt des Gasstroms, der mit der Heizeinrichtung erhitzt werden kann. Das Lagerelement dient als Auflage für die Heizeinrichtung.

Bei einer bevorzugten Ausführungsform des Heizsystems ist das Lagerelement der Heizeinheit aus einem elektrisch isolierenden, hitzebeständigen und insbesondere keramischen Werkstoff gefertigt. Der Werkstoff bildet eine Struktur aus, die eine Durchströmung durch den Gasstrom zulässt. Beispielsweise ist das eine Halterungsmatrix bildende Lagerelement aus einem keramischen Formstein mit einer Wabenstruktur, aus keramischen Stäben, aus einer Platte, aus einer Lochplatte oder einem andersartig ausgebildeten Bauteil mit einer offenen Struktur gefertigt. Insbesondere kann zur Herstellung des Lagerelementes eine faserverstärkte Keramik eingesetzt werden. Auch eine Kombination verschiedener Materialien zur Fertigung des Lagerelements ist denkbar.

Bei einer speziellen Ausführungsform des Heizsystems ist das Lagerelement aus einer Wabenkeramik gebildet, die auf Cordieritbasis hergestellt ist. Die Waben haben in Strömungsrichtung vorzugsweise einen quadratischen oder rechteckigen Querschnitt.

Vorzugsweise hat das Lagerelement eine Auflagefläche für die Heizeinrichtung, die mit der Anströmgrundfläche der Heizeinrichtung korrespondiert.

Damit keine ungewollten Bypass-Ströme entstehen, ist das Lagerelement bei einer bevorzugten Ausführungsform mit Seitenwänden versehen, die die Heizeinrichtung seitlich begrenzen und die zumindest in Querrichtung gasdicht ausgebildet sind.

Bei einer zweckmäßigen Ausführungsform des Heizsystems sind die Seitenwände einstückig mit dem Lagerelement ausgebildet. Denkbar ist es aber auch, dass die Seitenwände getrennte Bauelemente darstellen, die auf eine Bodenplatte des Lagerelements aufgesetzt sind.

Bei einem Heizsystem, das einen großen Strömungsquerschnitt bereitstellt, sind in vorteilhafter Weise innerhalb der Heizanordnung mehrere Heizeinheiten nebeneinander angeordnet. Die Heizanordnung umfasst also mehrere Lagerelemente und mehrere Heizeinrichtungen, die nebeneinander angeordnet sind und die zweckmäßigerweise elektrisch miteinander verschaltet sind, beispielsweise in Reihe oder auch parallel.

Des Weiteren weist eine vorteilhafte Ausführungsform des Heizsystems mindestens zwei Lagen an Heizeinheiten auf, die gestapelt übereinander angeordnet sind. Damit ist ein Stapelheizer ausgebildet, dessen Leistung bei einer weiteren speziellen Ausführungsform durch gezieltes Ein- und Ausschalten einzelner Heizeinrichtungen an sich ändernde Gasvolumenströme angepasst werden kann und bei dem auch bei begrenztem Strömungsquerschnitt des Heizsystems eine große thermische Heizleistung realisiert werden kann.

Insbesondere mit der als Stapelheizer ausgebildeten Heizanordnung können sehr hohe Luftaustrittstemperaturen erreicht werden, die bei bis zu 1000 °C oder auch darüber liegen.

Bei übereinander angeordneten Heizeinheiten sind die Seitenwände, mit denen die Lagerelemente versehen sind, gleichzeitig Abstandshalter zwischen den einzelnen Lagerelementen.

Die Seitenwände, die einstückig mit dem Lagerelement oder als separate keramische oder in sonstiger Weise ausgeführte Bauelemente ausgebildet sein können, schaffen eine definierte Kammer für die Heizeinrichtung, so dass diese auch bei einer Gasdurchströmung mit hohen Geschwindigkeiten sicher positioniert ist. Bei dem vorstehend beschriebenen Stapelheizer ist die Kammer für die Heizeinrichtung oben von einer nächsten Heizeinheit bzw. von deren Lagerelement begrenzt. Die oberste Heizeinheitlage kann von einer durchströmbaren Abdeckung begrenzt sein, welche die Oberseite der Heizanordnung bildet und ebenfalls vorzugsweise aus mindestens einem Formstein gebildet ist. Der Formstein kann einen quadratischen oder rechteckigen Grundriss haben und eine Wabenstruktur aufweisen, deren Waben insbesondere einen quadratischen oder auch sechseckigen Kanalquerschnitt aufweisen. Denkbar ist es aber auch, dass die Abdeckung aus keramischen Stäben, aus keramischen Platten, aus Lochplatten oder aus andersartigen gasdurchlässigen Bauelementen besteht, die insbesondere aus einer faserverstärkten Keramik gebildet sind.

Um die einzelnen Lagen der Heizanordnung bzw. der von den Lagerelementen gebildeten Halterungsmatrix gegen unerwünschte Relativverschiebungen zu sichern, ist es vorteilhaft, wenn die Kontaktflächen zwischen den Lagerelementen jeweils mit einer Lagesicherung versehen sind, die beispielsweise aus einem Vorsprung gebildet ist, der in eine Aussparung des angrenzenden Lagerelements eingreift. Beispielsweise ist der Vorsprung als Rippe oder als Noppe ausgeformt, wohingegen die korrespondierende Aussparung als Vertiefung oder Nut ausgeformt ist.

Die Seitenwände, mit denen das Lagerelement versehen ist, sind vorzugsweise auch in Strömungsrichtung gasdicht ausgeführt, um Bypass-Strömungen neben der Anströmgrundfläche der Heizeinrichtung zu vermeiden. Beispielsweise sind die Seitenwände hierzu mittels eines keramischen Papiers oder dergleichen abgedichtet.

Das Heizsystem weist bei einer weiteren speziellen Ausführungsform eine keramische und/oder metallische Trägerstruktur auf, auf der die Heizanordnung angeordnet ist. Beispielsweise umfasst die Trägerstruktur ein Gitter, auf dem die Heizanordnung aufliegt. Denkbar ist es auch, dass die Trägerstruktur mindestens einen Formstein, mindestens einen Feuerleichtstein und/oder eine keramische oder metallische Schüttung, vorzugsweise mindestens einen Wabenformstein umfasst. In jedem Fall muss die Trägerstruktur von dem Gasstrom durchströmbar sein.

Um eine gleichmäßigen Gasstrom über den freien Querschnitt der Heizanordnung zu gewährleisten, kann die Trägerstruktur statische und/oder einstellbare Drosselelemente umfassen. Ein statisches Drosselelement ist beispielsweise durch ein Lochblech gebildet.

Um die Heizanordnung zur Umgebung hin abzuschirmen, weist das Heizsystem vorzugsweise einen Heizkanal auf, in dem die Heizanordnung angeordnet ist. Zur thermischen Isolierung nach außen kann der Heizkanal, der insbesondere von einem Rohr oder einem Rechteckkanal gebildet sein kann, eine Innendämmung aufweisen.

Um eine Wartung der Heizanordnung zu ermöglichen, kann der Aufnahmekanal eine seitliche Öffnung haben, die mittels eines lösbaren Deckelelements verschlossen ist.

Des Weiteren kann es zur Regulierung der Gasströme vorteilhaft sein, wenn das Heizsystem auf der Eingangsseite und/oder auf der Ausgangsseite eine Drosseleinrichtung und/oder eine Absperreinrichtung aufweist. Diese sind insbesondere durch Ventile und/oder Klappen gebildet. Die Regulierung des Gasstromes kann alternativ oder zusätzlich auch über eine Drehzahlregulierung eines Gebläses erfolgen.

Die Heizeinrichtung des Heizsystems ist vorzugsweise gemäß der oben detailliert beschriebenen Heizeinrichtung ausgebildet.

Des Weiteren weist das Heizsystem auf der Ausgangsseite vorzugsweise ein Temperaturmesselement auf, mittels dessen auch eine Regelung der Gasaustrittstemperatur ermöglicht ist. Das Temperaturmesselement ist vorzugsweise in minimalem Abstand zu der Heizanordnung in elektrisch isolierter Weise angeordnet, so dass mit einem möglichst geringen zeitlichen Versatz die Temperatur des Gasstroms nach dem Austritt aus der Heizanordnung gemessen werden kann.

Bei einer bevorzugten Ausführungsform ist das Temperaturmesselement ein Thermoelement bzw. ein PT100 mit Mantelrohr, wobei dessen Messspitze in der Mitte eines in Strömungsrichtung angeordneten, kreisförmigen, sechseckigen, quadratischen oder rechteckigen Messkanals der Abdeckung des Heizsystems angeordnet ist, so dass die Temperatur des Gasstroms ohne relevante Totzeit ermittelt werden kann. Beispielsweise ist das Temperaturmesselement in einer horizontalen Bohrung der Abdeckung angeordnet. Zusätzlich oder alternativ kann auch in der Bodenplatte des Lagerelements ein Temperaturmesselement angeordnet sein.

Eine Regelung der Temperatur des Gasstroms an der Ausgangsseite kann auf unterschiedliche Art erfolgen. Vorzugsweise wird aber bei konstanter elektrischer Heizleistung der Gasstrom durch die Heizanordnung entsprechend der an der Ausgangsseite gemessenen Abweichung zwischen einer Ist- und einer Soll-Temperatur mittels eines Drosselorgans am Kanaleinlass und/oder am Kanalauslass gedrosselt oder erhöht und/oder durch Änderung der Gebläsedrehzahl angepasst. Diese Regelungsart eignet sich insbesondere für einen stationären Betrieb bei konstanter Heizleistung.

Bei nicht stationären Betriebszuständen, beispielsweise bei Aufheizvorgängen oder wechselnden Eintrittstemperaturen des in das Heizsystem einströmenden Gasstroms, kann die Gasaustrittstemperatur durch Anpassung der elektrischen Heizleistung beispielsweise mittels Thyristorsteuerung oder durch Zuschalten oder Abschalten einzelner Heizeinheiten oder Heizeinheitgruppen geregelt werden.

Des Weiteren kann das Heizsystem mehrere jeweils als Stapelheizer ausgebildete Heizanordnungen der oben beschriebenen Art umfassen. Diese können nebeneinander, hintereinander und/oder aufeinander angeordnet sein. Die Stromversorgung kann mit einem Mehrphasenstrom erfolgen, so dass die einzelnen Heizanordnungen gezielt angesteuert und nach Bedarf zuschaltbar sind.

Eine nicht von den Ansprüchen erfasste Wärmespeichervorrichtung kann einen Behälter mit einem Innenraum umfassen, der einen Speicherraum aufweist, in dem ein Wärmespeichermittel zur Speicherung thermischer Energie angeordnet ist, wobei der Behälter eine erste Öffnung, über die ein Gasstrom in den Innenraum einleitbar ist, und eine zweite Öffnung aufweist, über die der Gasstrom aus dem Innenraum ausführbar ist. Des Weiteren umfasst die Wärmespeichervorrichtung einen Heizerraum, in dem ein Heizsystem angeordnet ist, das von dem Gasstrom durchströmbar ist, wobei der Heizerraum über ein offenes Volumen des Innenraums mit dem Speicherraum für das Wärmespeichermittel verbunden ist. Sowohl der Heizerraum als auch der Speicherraum liegen in dem Behälter.

Bei der Wärmespeichervorrichtung sind also das Heizsystem, mittels dessen ein Gasstrom erhitzt werden kann, und das Wärmespeichermittel, mittels dessen thermische Energie gespeichert werden kann, in unterschiedlichen Bereichen des Innenraums des Behälters angeordnet. Zwischen dem Heizsystem und dem Wärmespeichermittel bzw. über diesen beiden Einheiten ist ein offenes Volumen ausgebildet, über das der Gasstrom, der von dem Heizsystem erhitzt wurde, zu dem Wärmespeichermittel strömen kann. Das offene Volumen ist eine Gasverteilungskammer der Wärmespeichervorrichtung, die gewährleistet, dass das durch das Heizsystem erhitzte Gas gleichmäßig durch den gesamten Querschnitt des Wärmespeichermittels strömt und diesem die Wärme überträgt.

Die Wärmespeichervorrichtung kann zum Einsatz kommen, um überschüssige elektrische Energie aus stark schwankenden regenerativen Quellen, beispielsweise aus Windkraftanlagen oder Photovoltaikanlagen, oder aus sonstigen angeschlossenen Stromnetzen effizient in Form von Wärme auf einem hohen Temperaturniveau zu speichern. So kann eine Stabilisierung des betreffenden Stromnetzes erreicht werden. Die in dem Wärmespeichermittel der Wärmespeichervorrichtung gespeicherte Wärme kann zu einem späteren Zeitpunkt bei Bedarf durch beispielsweise einen Wasserdampf-Prozess, einen Organic Rankine Cycle (ORC) oder dergleichen in elektrischen Strom umgewandelt werden oder auch an einen sonstigen Prozess (Industriewärmeversorgung, Trocknung, etc.) abgegeben werden. Zusätzlich kann die Wärmespeichervorrichtung zum Einsatz kommen, um unabhängig vom Beladezustand des Wärmespeichermittels für einen nachgeschalteten Prozess kontinuierlich elektrische Energie in Wärme auf einem hohen Temperaturniveau umzuwandeln, beispielsweise zur Versorgung der Industrie mit Wärme.

Grundsätzlich stellt die Wärmespeichervorrichtung einen Speicher für thermische Energie dar, der die Energie in Form von Wärme zeitgleich oder zeitversetzt im Vergleich zu der umgewandelten elektrischen Energie an einen Gasstrom abgeben kann.

Da das Heizsystem ohne zusätzliche Einhausung und Wärmedämmung in dem Behälter angeordnet ist, kann eine Minimierung der thermischen Trägheit des Gesamtsystems erzielt werden.

Des Weiteren bildet der insbesondere als Heizkanal ausgebildete Heizerraum, in dem das elektrische Heizsystem angeordnet ist, einen Thermosiphon, der eine thermisch günstige Anordnung von gegebenenfalls erforderlichen Absperr- und Drosselorganen an einer Stelle der Wärmespeichervorrichtung erlaubt, an der niedrige Temperaturen herrschen, und der durch seine Anordnung in dem Behälter kaum zusätzliche Wärmeverluste im Vergleich zu einem außenliegenden Thermosiphon erzeugt.

Bei einer vorteilhaften Ausführungsform der Wärmespeichervorrichtung ist der Heizerraum, in dem das elektrische Heizsystem angeordnet ist, durch eine Trennwand von dem Aufnahmeraum für das Wärmespeichermittel getrennt. Der Heizraum ist damit in einem definierten Bereich des Innenraums des Behälters angeordnet.

Damit das Wärmespeichermittel in effizienter Weise von dem Gasstrom durchströmt werden kann, ist es bei einer bevorzugten Ausführungsform der Wärmespeichervorrichtung auf einer Trägerkonstruktion angeordnet. Beispielsweise ist die Trägerkonstruktion eine Gitterstruktur, die an Wänden des Behälters fixiert ist oder nach Art eines Tisches auf einem Boden des Behälters gelagert ist.

Um das Ausströmen des Gasstroms nach dem Beladen des Wärmespeichermittels zu begünstigen, ist unter der Trägerkonstruktion ein Verteilerraum angeordnet, der mit einer Warmluftöffnung des Behälters verbunden ist. Insbesondere ist die Warmluftöffnung die zweite Öffnung des Behälters.

Ein besonders effizienter Lade- und Entladeprozess kann realisiert werden, wenn die Wärmespeichervorrichtung zusätzlich eine Entladeöffnung hat, die oberhalb des Wärmespeichermittels angeordnet ist. Beispielsweise erfolgt das Entladen des Wärmespeichers derart, dass über eine Warmluftöffnung ein warmer Gasstrom und/oder Umgebungsluft (bei einem offenen System) eingeleitet und durch das Wärmespeichermittel geführt werden/wird. In diesem wird der warme Gasstrom erhitzt und dann über die Entladeöffnung als Heißluftstrom aus der Wärmespeichervorrichtung ausgleitet.

Bei einer speziellen Ausführungsform der Wärmespeichervorrichtung umfasst das Wärmespeichermittel Formsteine, die von dem Gasstrom durchströmbar sind und die vorzugsweise einen Mauerverbund bilden. Beispielsweise haben die Formsteine jeweils eine Wabenstruktur mit vertikal stehenden Kanälen, die jeweils einen quadratischen oder auch sechseckigen Querschnitt haben.

Bei einer alternativen Ausführungsform ist es auch denkbar, dass das Wärmespeichermittel zusätzlich zu den Formsteinen oder statt den Formsteinen eine Schüttung oder dergleichen umfasst, die aus einem geeigneten Material besteht.

Um das Heizsystem austauschen bzw. warten zu können, weist die Wärmespeichervorrichtung bei einer bevorzugten Ausführungsform eine Wartungsöffnung auf, die mittels eines lösbaren Wandelements verschlossen ist.

Die Wartungsöffnung der Wärmespeichervorrichtung führt vorzugsweise direkt in den Heizkanal, in dem das elektrische Heizsystem angeordnet ist.

Der Heizkanal, in dem das elektrische Heizsystem angeordnet ist, hat vorzugsweise einen zumindest weitgehend rechteckigen Querschnitt. In diesen Querschnitt ist das elektrische Heizsystem in einfacher Weise einpassbar.

Eine besonders effiziente Verteilung des Gasstroms über den Querschnitt des Wärmespeichermittels kann erreicht werden, wenn der Heizerraum, in dem das elektrische Heizsystem angeordnet ist, eine Austrittsöffnung hat, die in Höhe einer Oberseite des Wärmespeichermittels angeordnet ist, wobei oberhalb des Wärmespeichermittels das offene Volumen des Innenraums liegt.

Bei einer bevorzugten Ausführungsform der Wärmespeichervorrichtung umfasst das elektrische Heizsystem, das in dem Heizerraum angeordnet ist, eine Widerstandsheizung und insbesondere ein Heizsystem, das gemäß dem oben beschriebenen Heizsystem mit Lagerelement und Heizeinheit ausgebildet ist. Damit kann das Heizsystem nach Art eines Stapelheizers ausgebildet sein.

Ein nicht von den Ansprüchen erfasstes Wärmespeichersystem umfasst eine Wärmespeichervorrichtung der vorstehend beschriebenen Art und eine Leitungsanordnung, die mit der Wärmespeichervorrichtung verbunden ist. Die Leitungsanordnung kann zu einem Verbraucher führen, dem die in dem Wärmespeicher in der Wärmespeichervorrichtung gespeicherte Wärme in Form von Heißluft über die Leitungsanordnung zugeführt werden kann. Beispielsweise ist der Verbraucher ein Wärmetauscher (z. B. ein Dampferzeuger) eines Kraftwerks, so dass mittels der in der Wärmespeichervorrichtung vorgehaltenen Wärme mittels einer Turbine und eines Generators Strom erzeugt werden kann.

Um den Gasstrom durch die Wärmespeichervorrichtung leiten zu können, weist das Wärmespeichersystem vorzugsweise ein insbesondere hinsichtlich Drehzahl einstellbares Gebläse auf, das in der Leitungsanordnung angeordnet ist.

Des Weiteren umfasst die Leitungsanordnung vorzugsweise einen Ladekreis, der mit zwei Öffnungen der Wärmespeichervorrichtung verbunden ist, so dass über eine Öffnung Warmluft eingeleitet werden kann. In der Wärmespeichervorrichtung wird die Warmluft in dem Heizsystem erhitzt und anschließend nach Durchströmen des offenen Volumens des Innenraums in dem Wärmespeichermittel entladen, um anschließend über die zweite Öffnung wieder als Warmluft aus der Wärmespeichervorrichtung ausströmen zu können.

Vorzugsweise umfasst die Leitungsanordnung Ventile und/oder Klappen zum Steuern des Gasstroms durch die Wärmespeichervorrichtung.

Weitere Vorteile und vorteilhafte Ausgestaltungen des Gegenstandes der Erfindung sind der Beschreibung, der Zeichnung und den Patentansprüchen entnehmbar.

Ausführungsbeispiele des Gegenstandes der Erfindung sind in der Zeichnung schematisch vereinfacht dargestellt und werden in der nachfolgenden Beschreibung näher erläutert. Es zeigt:
- Figur 1: eine schematische, perspektivische Schnittdarstellung einer Wärmespeichervorrichtung;
- Figur 2: den Schnitt nach Figur 1 in einer Draufsicht;
- Figur 3: einen Schnitt durch die Wärmespeichervorrichtung entlang der Linie III-III in Figur 2;
- Figur 4: eine perspektivische Schnittdarstellung einer alternativen Ausführungsform einer Wärmespeichervorrichtung;
- Figur 5: den Schnitt nach Figur 4 in einer Draufsicht;
- Figur 6: einen Schnitt durch die Wärmespeichervorrichtung nach Figur 5 entlang der Linie VI-VI in Figur 5;
- Figur 7: ein Heizsystem der Wärmespeichervorrichtungen nach den Figuren 1 bis 6;
- Figur 8: eine perspektivische Darstellung einer Variante einer Halterungsmatrix des Heizsystems;
- Figur 9: eine Heizeinheit des Heizsystems nach Figur 7;
- Figur 10: eine Draufsicht auf eine Variante einer Heizeinrichtung einer Heizeinheit der in Figur 9 dargestellten Art;
- Figur 11: eine vergrößerte Darstellung des Bereichs XI in Figur 10;
- Figur 12: eine vergrößerte Darstellung des Bereichs XII in Figur 9;
- Figur 13: einen Schnitt durch eine alternative Ausführungsform einer Wärmespeichervorrichtung in einem Beladebetrieb;
- Figur 14: einen Entladebetrieb der Wärmespeichervorrichtung nach Figur 13;
- Figur 15: einen Heizbetrieb ohne Speichervorgang der Wärmespeichervorrichtung nach Figur 13;
- Figur 16: einen Heizbetrieb mit Beladevorgang der Wärmespeichervorrichtung nach Figur 13;
- Figur 17: einen Heizbetrieb mit gleichzeitigem Entladeprozess der Wärmespeichervorrichtung nach Figur 13;
- Figur 18: einen schematischen Aufbau eines Wärmespeichersystems mit einem Verbraucher im Belademodus;
- Figur 19: das Wärmespeichersystem nach Figur 18 in einem Entlademodus; und
- Figur 20: das Wärmespeichersystem nach Figur 18 in einem Heizmodus.

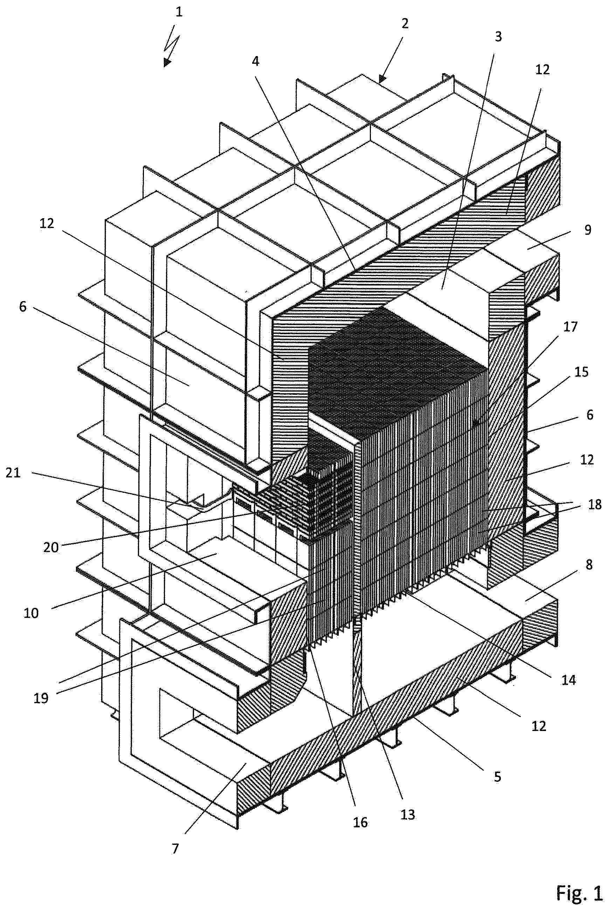

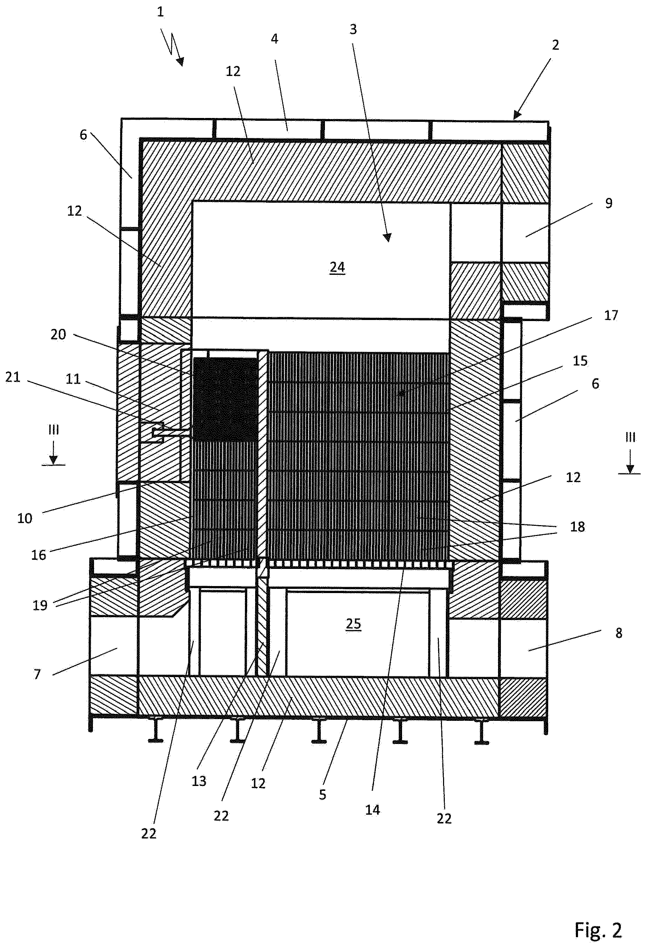

In den Figuren 1 bis 3 ist eine Wärmespeichervorrichtung 1 dargestellt, die zum Einsatz kommen kann, um überschüssige elektrische Energie aus stark schwankenden regenerativen Quellen, beispielsweise aus Windkraftanlagen oder aus Photovoltaikanlagen, oder aus angeschlossenen Stromnetzen effizient in Form von Wärme auf einem hohen Temperaturniveau zu speichern und so das Stromnetz zu stabilisieren. Die gespeicherte Wärme kann zu einem späteren Zeitpunkt durch einen Wasser-Dampf-Prozess, einen ORC-Prozess oder dergleichen bedarfsgerecht in elektrischen Strom umgewandelt werden oder auch für andere industrielle oder versorgungstechnische Prozesse indirekt in Form von Wasserdampf oder direkt in Form eines Heißgases abgegeben werden. Zudem kann die Wärmespeichervorrichtung 1 unter Einsatz elektrischer Energie Heißluft auf einem hohen Temperaturniveau erzeugen, die beispielsweise in angebundenen Kraftwerks- oder Industrieprozessen genutzt werden kann.

Die Wärmespeichervorrichtung 1 umfasst einen im weitesten Sinne quaderförmigen Behälter 2, in dem ein Innenraum 3 ausgebildet ist, der sich in vertikaler Richtung zwischen einer Behälterdecke 4 und einem Behälterboden 5 und in den Querrichtungen zwischen vier Seitenwänden 6 erstreckt.

Der Behälter 2 ist an einer Seitenwand 6 nahe an dem Behälterboden 5 mit einer Beladeöffnung 7, an einer weiteren Seitenwand 6 nahe an dem Behälterboden 5 mit einer Ein-/Ausströmöffnung 8 und an dieser Seitenwand 6 angrenzend an die Behälterdecke 4 mit einer Entladeöffnung 9 versehen. Die Beladeöffnung 7, die Ein-/Ausströmöffnung 8 und die Entladeöffnung 9 sind mit Leitungen eines Rohrleitungssystems verbindbar.

Des Weiteren ist an der Seitenwand 6, an der die Beladeöffnung 7 ausgebildet ist, in einem in vertikaler Richtung mittigen Bereich eine Wartungsöffnung 10 ausgebildet, welche mittels eines lösbaren Wandelements 11 gasdicht verschlossen werden kann.

An der Innenseite sind die Seitenwände 6, die Behälterdecke 4 und der Behälterboden 5 jeweils mit hochtemperaturbeständigen Dämmschichten 12 versehen.

Der Innenraum 3 des Behälters 2 hat im Wesentlichen quaderförmige Abmessungen. Zudem ist in dem Innenraum 3 eine im Querschnitt im Wesentlichen U-förmige Trennwand 13 ausgebildet, die auf dem Behälterboden 5 steht und eine vertikale Ausrichtung hat. Die Trennwand 13 grenzt mit ihren kurzen Schenkeln an die Seitenwand 6, an der die Wartungsöffnung 10 ausgebildet ist.

Mit Abstand von dem Behälterboden 5 und oberhalb der Beladeöffnung 7 und der Ein-/Ausströmöffnung 8 ist der Innenraum 3 von einer Gitterstruktur 14 durchspannt, welche eine horizontale Ausrichtung hat und an den Seitenwänden 6 und der Trennwand 13 befestigt ist und/oder über Füße 22 auf dem Behälterboden 5 aufsteht. Die Gitterstruktur 14 bildet eine Trägerstruktur bzw. Trägerkonstruktion.

Die Trennwand 13 trennt einen Speicherraum 15 von einem Heizerraum 16 des Innenraums 3 ab. Der Speicherraum 15 nimmt ein Wärmespeichermittel 17 auf, das aus übereinandergeschichteten keramischen Formsteinen 18 besteht, die jeweils einen quadratischen Grundriss haben und jeweils eine Wabenstruktur aufweisen, deren Waben Strömungskanäle bilden, die sich in vertikaler Richtung bzw. Hochrichtung der Wärmespeichervorrichtung 1 erstrecken.

Bei einer alternativen Ausführungsform kann das Wärmespeichermittel 17 auch aus einer Schüttung oder dergleichen gebildet sein.

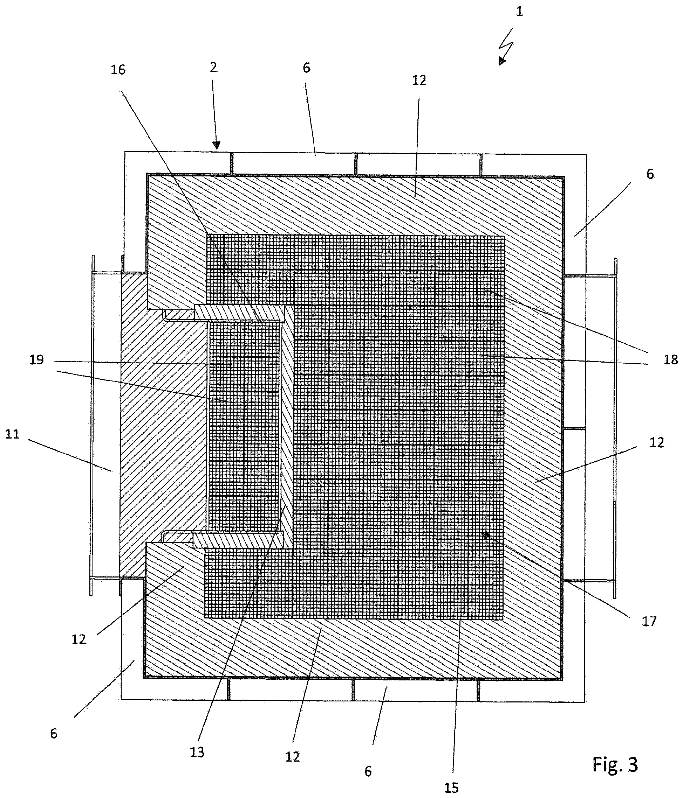

Die Formsteine 18 reichen von der Gitterstruktur 14 bis nahe an den oberen Rand der Trennwand 13 und umgreifen, wie Figur 3 zu entnehmen ist, die Trennwand 13 an ihren drei Seiten.

Der Heizerraum 16 bildet einen Heizkanal aus, der unten von der Gitterstruktur 14 begrenzt ist und auf dem als Trägerkonstruktion ein Stapel Formsteine 19 angeordnet ist, die jeweils ebenfalls eine Wabenstruktur haben und den Formsteinen 18 entsprechen, die in dem Speicherraum 15 angeordnet sind. Der Stapel aus den Formsteinen 19 hat eine Bauhöhe, die geringer ist als diejenige der Formsteine 18 in dem Speicherraum 15. Auf den Formsteinen 19 ist eine Heizanordnung 20 angeordnet, die eine elektrische Heizeinrichtung darstellt und über Anschlüsse 21 mit einer Stromquelle, beispielsweise mit einer Windkraftanlage, einer Photovoltaikanlage und/oder dem Stromnetz verbunden ist. Eine Oberseite der Heizanordnung 20 fluchtet in etwa mit der Oberseite des Wärmespeichermittels 17 in dem Speicherraum 15.

Wie bereits oben erwähnt, ist die Wartungsöffnung 10 mittels eines lösbaren Wandelements 11 verschließbar. Das Wandelement 11 hat innenseitig ein Dämmungsstopfen.

Der Speicherraum 15 und der Heizerraum 16 sind über ein offenes Volumen 24 des Innenraums 3 miteinander verbunden, das oberhalb des mit dem Heizsystem versehenen Heizerraums 16 oder oberhalb des von dem Wärmespeichermittel 17 ausgefüllten Speicherraums 15 angeordnet ist und einen Gasverteilungsraum bildet.

Unterhalb des Heizerraums 16, das heißt unterhalb der Gitterstruktur 14 ist ein Gasverteilungsraum angeordnet, über den von der Beladeöffnung 7 Gas in den Heizerraum 16 strömen kann. Unterhalb des Speicherraums 15, in dem das Wärmespeichermittel 17 angeordnet ist, ist ein Gasverteilungsraum 25 angeordnet, der mit der Ein-/Ausströmöffnung 8 verbunden ist.

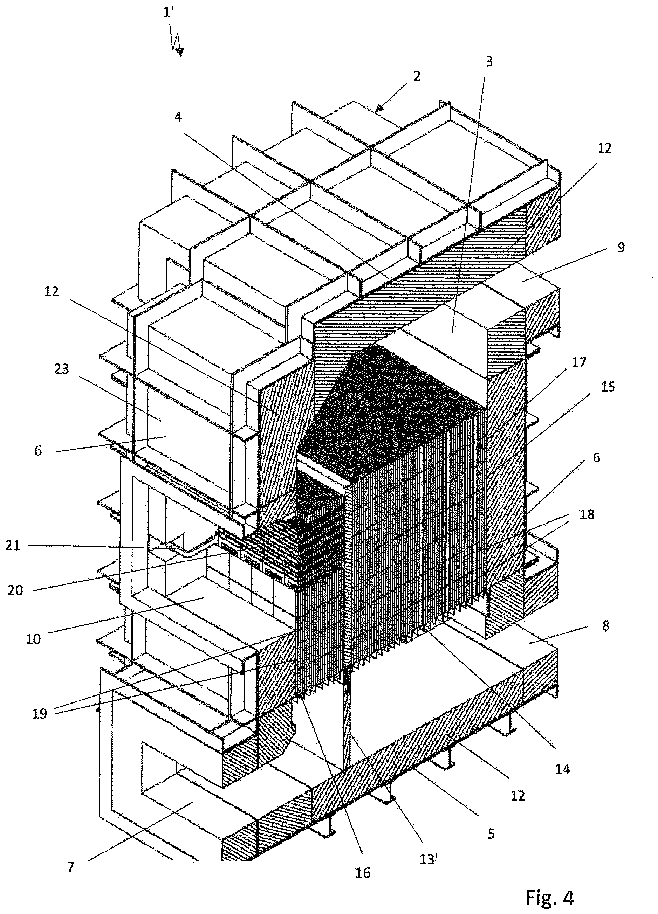

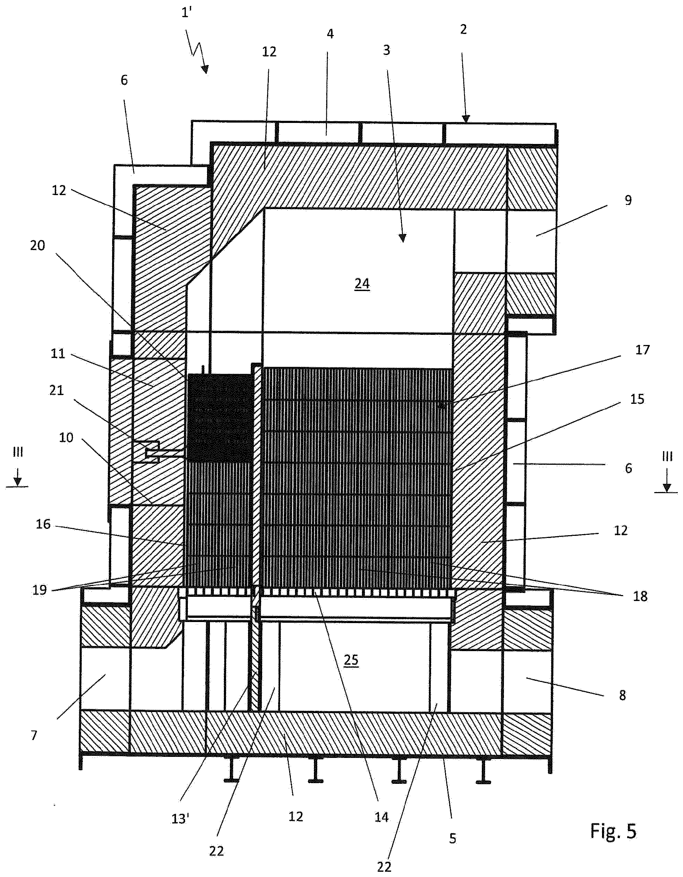

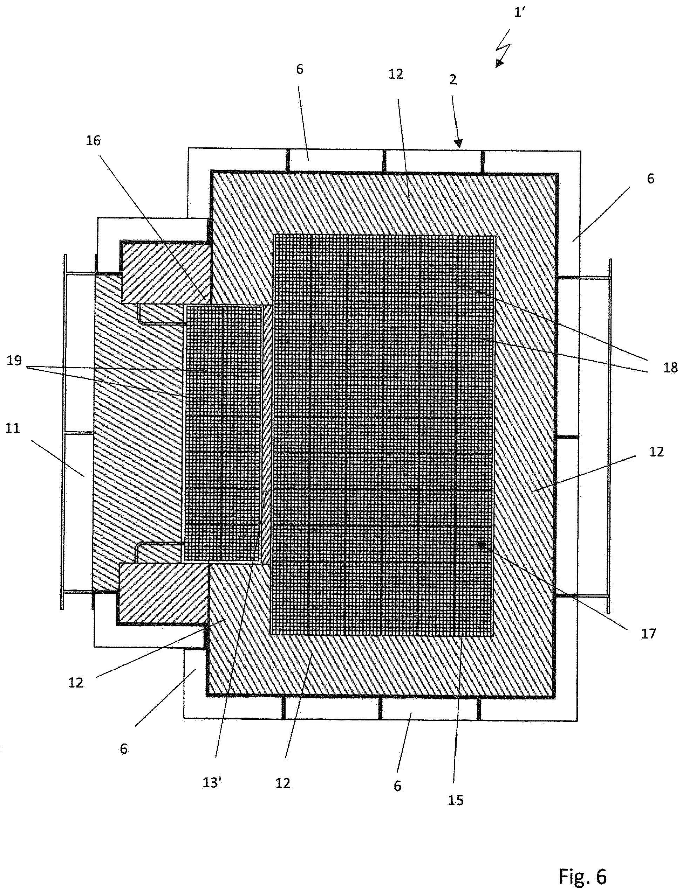

In den Figuren 4 bis 6 ist eine Wärmespeichervorrichtung 1' dargestellt, die eine alternative Ausführungsform darstellt und weitgehend derjenigen nach den Figuren 1 bis 3 entspricht, sich von dieser aber dadurch unterscheidet, dass der Behälter 2 auf der Seite der Wartungsöffnung 10 eine Seitenwand 6' umfasst, die einen nach außen versetzten Ansatz 23 aufweist. Damit ist es möglich, dass eine Trennwand 13', die einen Heizerraum 16 von einem Speicherraum 15 des Innenraums 3 trennt, mit der Innenseite der Seitenwand 6' fluchtet.

Im Übrigen ist die Wärmespeichervorrichtung 1' entsprechend der Wärmespeichervorrichtung nach den Figuren 1 bis 3 ausgebildet, so dass auf die diesbezügliche Beschreibung verwiesen wird.

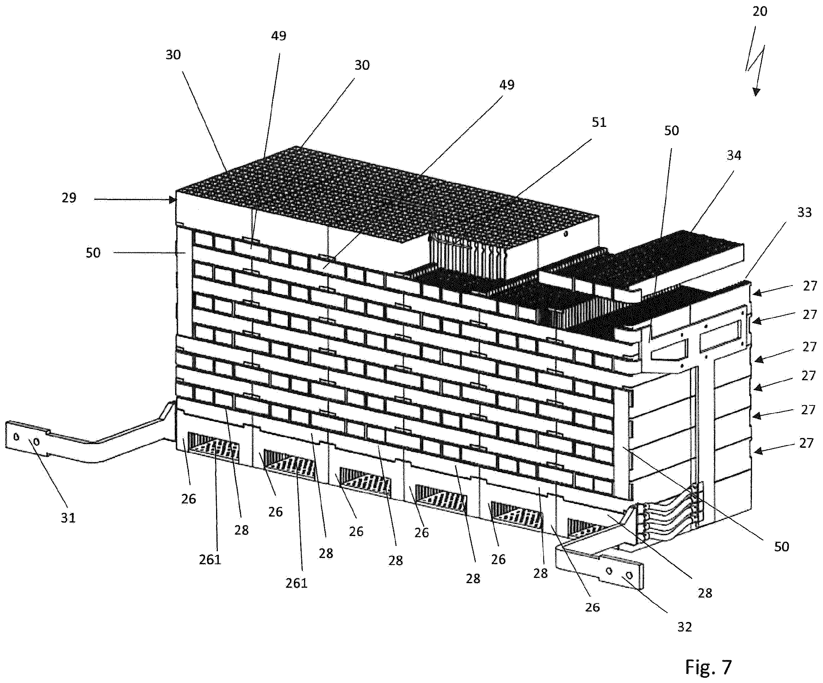

In Figur 7 ist die Heizanordnung 20 des in dem Heizerraum 16 der oben beschriebenen Wärmespeichervorrichtungen angeordneten Heizsystems in Alleinstellung gezeigt. Die Heizanordnung 20 ist bodenseitig mit zwei hintereinander angeordneten Reihen aus sechs Formsteinen 26 versehen, die eine Trägerstruktur bilden und die jeweils eine Wabenstruktur haben und deren von den Waben gebildeten Kanäle in vertikaler Richtung durchströmbar sind. Die Formsteine 26 sind keramische Formsteine, die auf Cordieritbasis hergestellt sind. Auf den Formsteinen 26, die einen im Wesentlichen umgekehrt U-förmigen Querschnitt haben und unten mit einer ein statisches Drosselelement darstellenden Lochplatte 261 versehen sind, sind mehrere Lagen 27 angeordnet, die jeweils aus im vorliegenden Fall sechs nebeneinander angeordneten Heizeinheiten 28 gebildet sind. Oberseitig ist die Heizanordnung 20 mit einer eine Abdeckung 29 bildenden Lage von nebeneinander angeordneten Formsteinen 30 begrenzt, die ebenfalls eine Wabenstruktur haben und deren von den Waben gebildete Kanäle in vertikaler Richtung ausgerichtet und durchströmbar sind. Des Weiteren umfasst die Heizanordnung 20 zwei Anschlusskontakte 31 und 32, welche mit einer Stromquelle oder einem Stromnetz verbunden sind.

Die Heizeinheiten 28 sind grundsätzlich aus Gleichteilen zusammengesetzt und umfassen jeweils zwei Lagerelemente 33 und eine Heizeinrichtung 34. Die Lagerelemente 33 sind jeweils aus einem keramischen Formstein gebildet, der auf Cordieritbasis hergestellt ist und eine Wabenstruktur hat. Die einzelnen Waben der Lagerelemente 33 bilden jeweils einen sich in vertikaler Richtung erstreckenden Kanal und haben jeweils einen quadratischen Grundriss. Des Weiteren haben die Lagerelemente 33 jeweils einen im Wesentlichen U-förmigen Querschnitt, so dass eine Bodenplatte 35 und zwei Seitenwände 36 ausgebildet sind, welche einen Aufnahmeraum zur passgenauen Aufnahme der Heizeinrichtung 34 begrenzen. An der Unterseite haben die Bodenplatten 35 der Lagerelemente 33 im Bereich der seitlichen Ränder jeweils eine im Querschnitt rechteckige Ausnehmung 37, in welche im gestapelten Zustand die Oberseite der betreffenden Seitenwand 36 des darunterliegenden Lagerelements 33 eingreift. Damit ist eine positionsgenaue Anordnung der übereinander angeordneten Lagerelemente 33 gewährleistet. In die Ausnehmungen 37 der untersten Lage von Heizeinheiten 28 greifen oberseitige Rippen der Formsteine 26 ein.

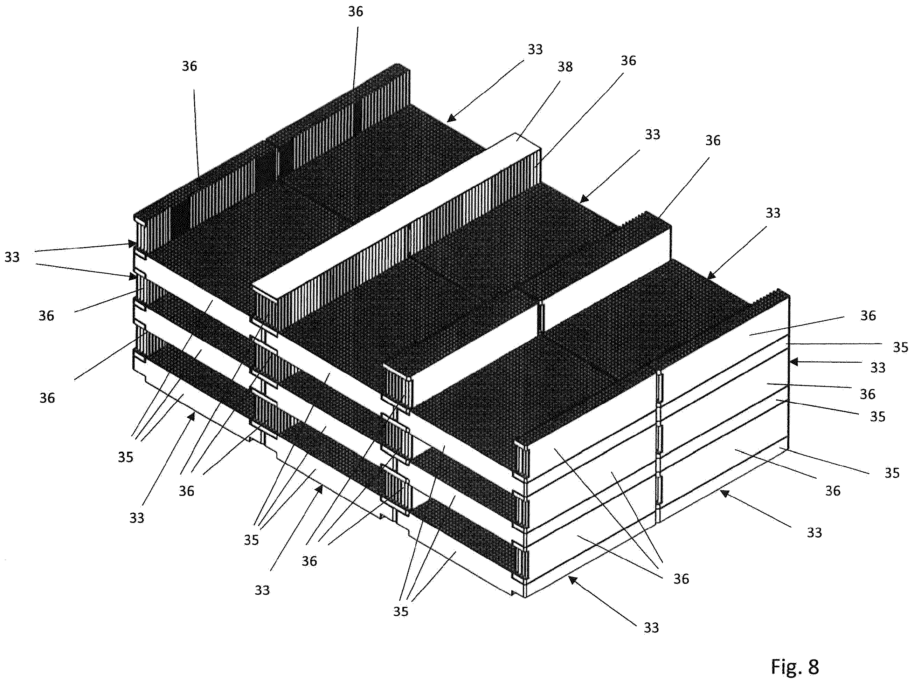

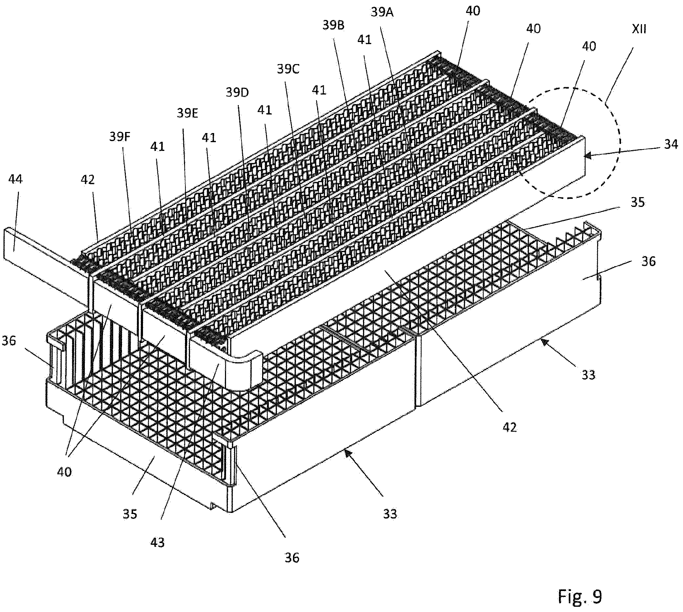

Bei der in Figur 9 dargestellten Variante sind die Seitenwände 36 und die Bodenplatte 35 eines Lagerelements 33 einstückig gefertigt. Bei der in Figur 8 dargestellten Variante sind die Seitenwände 36 separate Bauelemente, welche jeweils auf eine Bodenplatte aufgesetzt sind. Zudem teilen sich nebeneinander angeordnete Lagerelemente jeweils eine Seitenwand, das heißt diese Seitenwand übergreift benachbarte Bodenplatten 35.

Um eine Durchströmung der Seitenwände 36 und damit einen Bypass-Gasstrom zu verhindern, sind die Seitenwände 36 an ihrer Oberseite mit einer Abdichtung 38 versehen, die beispielsweise aus einem keramischen Papier besteht (vgl. Fig. 8).

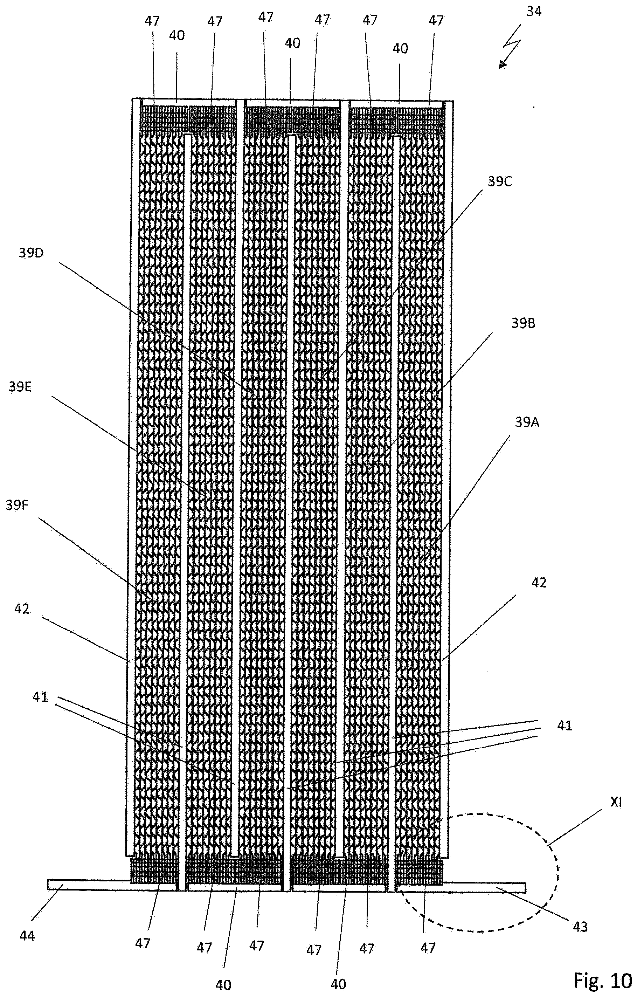

Die Heizeinrichtungen 34 der Heizeinheiten 28 sind im Wesentlichen baugleich ausgeführt und haben jeweils eine Anströmgrundfläche, die im vorliegenden Fall mit der Fläche zwischen den Seitenwänden 36 zweier hintereinander angeordneter Lagerelemente 33 korrespondiert. In Einbaulage liegt die Heizeinrichtung 34 auf den Bodenplatten 35 dieser beiden Lagerelemente 33 auf. Wie insbesondere den Figuren 9 bis 11 zu entnehmen ist, umfassen die Heizeinrichtungen 34 jeweils sechs Heizblecheinheiten 39A, 39B, 39C, 39D, 39E und 39F, die in Reihe geschaltet sind. Hierzu sind die Heizblecheinheiten 39A und 39B, die Heizblecheinheiten 39B und 39C, die Heizblecheinheiten 39C und 39D, die Heizblecheinheiten 39D und 39E und die Heizblecheinheiten 39E und 39F jeweils über ein Kontaktblech 40 miteinander verbunden, das an einer betreffenden Stirnseite der Heizeinrichtung 34 angeordnet ist. Zwischen benachbarten Heizblecheinheiten ist jeweils eine Trennwand 41 angeordnet, die aus einem elektrisch isolierenden Material, beispielsweise aus einem Keramikmaterial, gefertigt ist und auch eine elektrische Isolierung zwischen jeweils benachbarten Kontaktblechen 40 gewährleistet. Des Weiteren umfasst die Heizeinrichtung 34 Seitenwände 42, welche in Einbaulage an die betreffenden Seitenwände 36 der betreffenden beiden Lagerelemente 33 grenzen bzw. an diesen anliegen. Zur elektrischen Kontaktierung weist die Heizeinrichtung 34 ein erstes Anschlusselement 43 und ein zweites Anschlusselement 44 auf, wobei die Anschlusselemente 43 und 44 jeweils aus einem Blechteil gebildet sind, das mit den Kontaktblechen 40 fluchtet, die an der betreffenden Stirnseite der Heizeinrichtung 34 angeordnet sind. Das Anschlusselement 43 ist elektrisch mit einer Stirnseite der Heizblecheinheit 39A verbunden, wohingegen das Anschlusselement 44 mit einer Stirnseite der Heizblecheinheit 39F elektrisch verbunden ist.

Die einzelnen Heizblecheinheiten 39A, 39B, 39C, 39D, 39E und 39F umfassen jeweils eine Vielzahl von Heizblechstreifen 45 und 46.

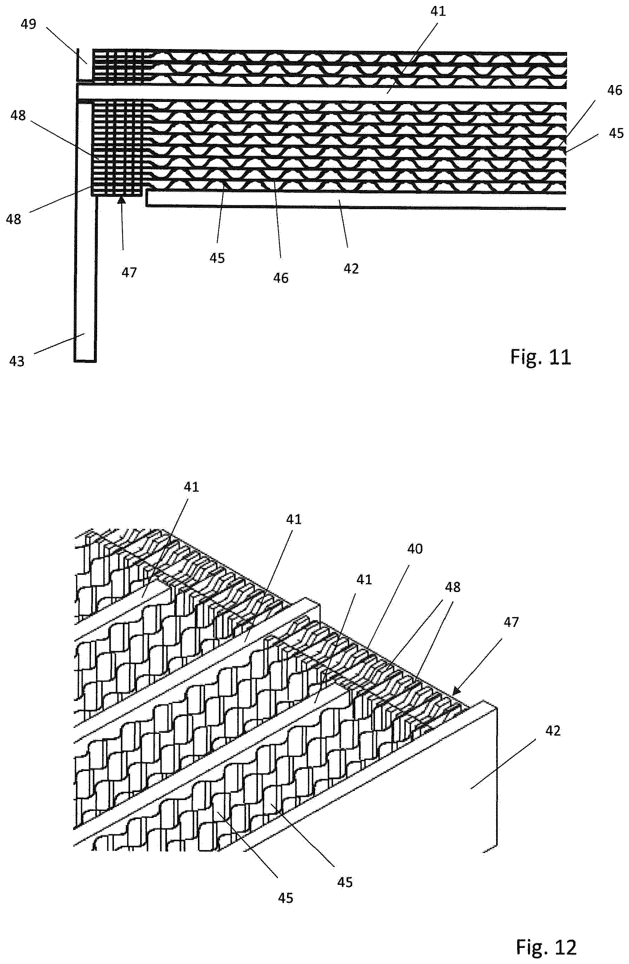

Bei der in Figur 11 dargestellten Ausführungsform sind in Stapelrichtung hintereinander abwechselnd gewellte Heizblechstreifen 45 und ebene Heizblechstreifen 46 angeordnet, wobei sich die gewellten Heizblechstreifen 45 mit ihren Wellenkämmen an den benachbarten ebenen Heizblechstreifen 46 abstützen. Die außen liegenden gewellten Heizblechstreifen 45 stützen sich auch an der betreffenden Trennwand 41 bzw. der betreffenden Seitenwand 42 ab.

In ihren Endbereichen sind die Heizblechstreifen 45 und 46 parallel zueinander ausgerichtet und jeweils über eine Abstandshalterstruktur 47 miteinander verbunden, welche auch die Kontaktierung des betreffenden Heizblechstapels an dem Anschlusselement 43 bzw. 44 bzw. dem betreffenden Kontaktblech 40 herstellt. Die Abstandshalterstruktur 47 umfasst als Distanzelemente ausgebildete Futterbleche 48, die zwischen den parallel ausgerichteten Endbereichen benachbarter Heizblechstreifen angeordnet sind und mit diesen verschweißt oder verlötet sind. Die Futterbleche 48 haben jeweils eine Dicke, die der Amplitude der Wellung der gewellten Heizblechstreifen 45 entspricht.

Durch die Wellung der Heizblechstreifen 45 ist eine Wabenstruktur ausgebildet, die eine große Anströmfläche für den Gasstrom bereitstellt, der durch die Heizeinrichtung 34 strömt.

Bei einer alternativen Ausführungsform können auch mehrere Futterbleche zwischen benachbarten Heizblechstreifen angeordnet sein. Denkbar ist es bei einer nicht von den Ansprüchen erfassten Ausführungsform auch, dass die Abstandshalterstruktur aus einer Kammstruktur gebildet ist, in die die Endbereiche der Heizblechstreifen eingesteckt sind.

Des Weiteren wird darauf verwiesen, dass bei der in den Figuren 9 und 12 dargestellten Variante in den Heizblechstapeln nur gewellte Heizblechstreifen vorgesehen sind, die in ihren beiden Endbereichen jeweils über eine leitfähige Abstandshalterstruktur aus Futterblechen miteinander verbunden sind.

Grundsätzlich ist es denkbar, dass die Heizeinrichtungen der Heizeinheiten in den verschiedenen Lagen 27 der Heizanordnung 20 unterschiedliche Bauhöhen und/oder unterschiedliche Wabenkanalformen aufweisen. Die Heizeinrichtungen 34 einer Lage 27 der Heizanordnung 20 sind bei der vorliegend dargestellten Ausführungsform über Kontaktbleche 49 in Reihe geschaltet. Denkbar ist es natürlich auch, diese parallel zu schalten. Des Weiteren sind bei der vorliegenden Ausführungsform aufeinanderfolgende Schichten über Kontaktstreifen 50 paarweise parallel geschaltet. Grundsätzlich ist die Verschaltung der Heizeinrichtungen 34 bedarfsgerecht beliebig auswählbar.

Um die Temperatur des mittels der Heizanordnung 20 aufgeheizten Gasstroms ermitteln zu können, ist in der Abdeckung 29 in einer Querbohrung eines Formsteins 30 ein Thermoelement 51 angeordnet.

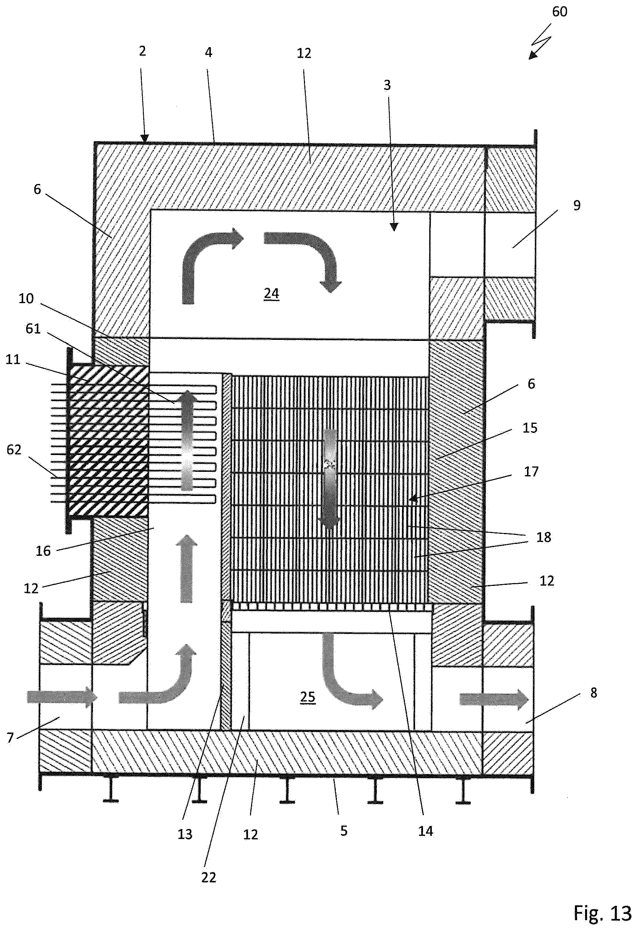

In den Figuren 13 bis 17 ist eine Wärmespeichervorrichtung 60 dargestellt, die weitgehend derjenigen nach den Figuren 1 bis 3 entspricht, sich von dieser aber dadurch unterscheidet, dass sie in dem Heizerraum 16, der einen Heizkanal ausbildet, keinen Stapelheizer der vorstehend beschriebenen Art umfasst. Vielmehr greifen in den Heizerraum 16 Widerstandsheizelemente 61 ein, die aus Heizwendeln oder dergleichen gebildet sind und über einen Anschlussbereich 62 mit einem Stromnetz verbunden sind. Im Übrigen entspricht die Wärmespeichervorrichtung 60 derjenigen nach den Figuren 1 bis 3, weswegen auf die diesbezügliche Beschreibung verwiesen wird.

Entsprechend den Wärmespeichervorrichtungen 1 und 1' kann die Wärmespeichervorrichtung 60 mittels entsprechender Ventile in einen Beladebetrieb geschaltet sein, in dem über eine Beladeöffnung 7 ein aus Warmluft bestehender Gasstrom eingeleitet wird. Dieser Gasstrom wird, wie Figur 13 zu entnehmen ist, in dem Heizerraum 16 von unten nach oben geführt und mittels der Widerstandsheizelemente 61 erhitzt und über den ein offenes Volumen bildenden Gasverteilungsraum 24 durch das Wärmespeichermittel 17 geleitet, das aus den Formsteinen 19 aufgebaut ist. Die Formsteine 19 werden dadurch beladen, das heißt erhitzt. Der dann wieder abgekühlte Gasstrom wird über den Gasverteilungsraum 25 und die Ein-/Ausströmöffnung 8 wieder aus der Wärmespeichervorrichtung 60 ausgeleitet.

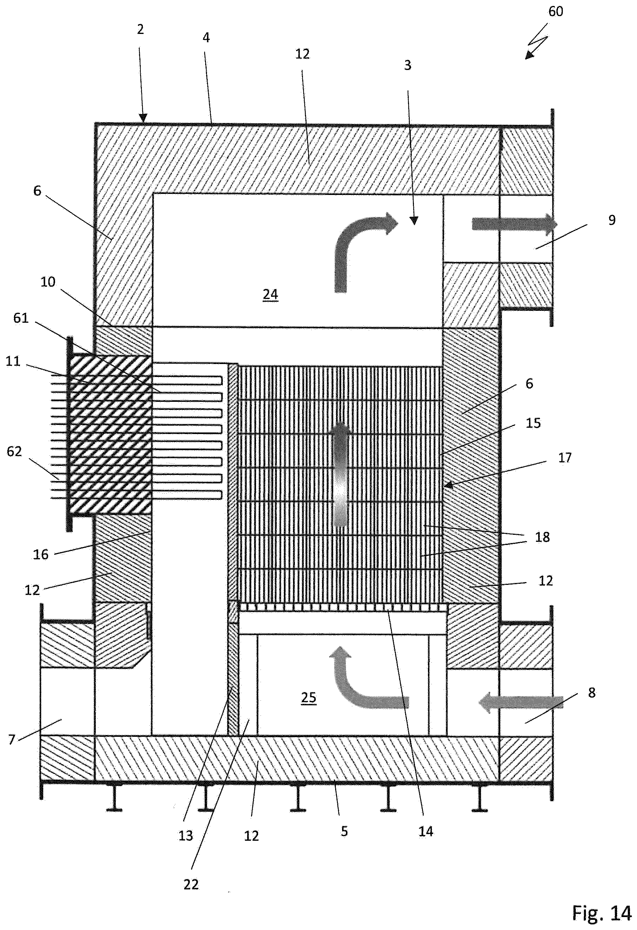

In einem in Figur 14 dargestellten Entladebetrieb wird ein aus Warmluft bestehender Gasstrom über die Ein-/Ausströmöffnung 8 in die Wärmespeichervorrichtung eingeleitet und dort über den Gasverteilungsraum 25 von unten nach oben durch das aus den Formsteinen 19 gebildete Wärmespeichermittel 17 geleitet und dort aufgeheizt. Nach dem Aufheizen wird der erhitzte Gasstrom über den oberen Gasverteilungsraum 24 und die Entladeöffnung 9 zur weiteren Verwendung aus der Wärmespeichervorrichtung ausgeleitet.

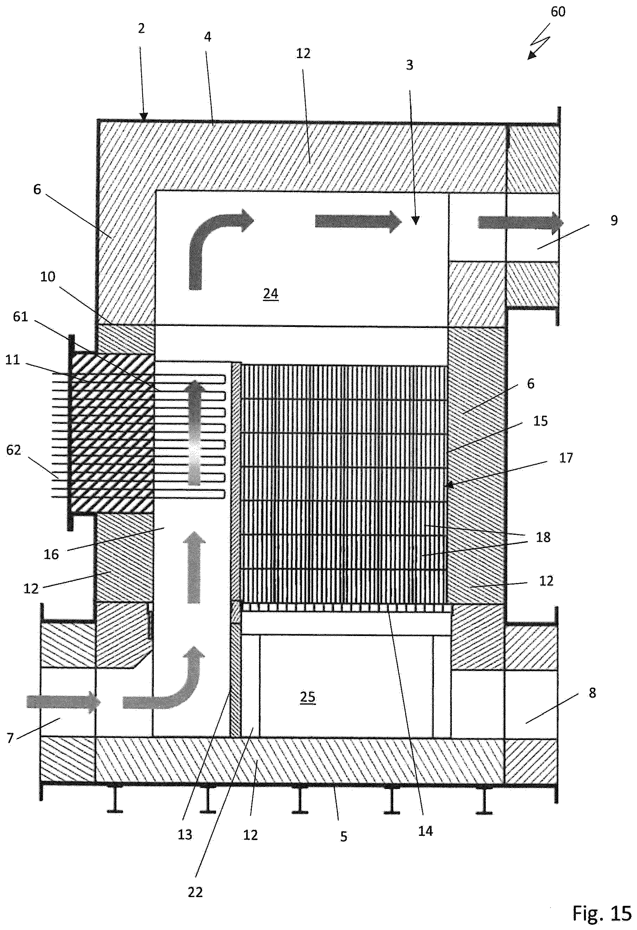

In Figur 15 ist für die Wärmespeichervorrichtung 60 ein Heizbetrieb ohne Wärmespeicherung dargestellt. In diesem Betrieb wird ein Warmluft-Gasstrom über die Beladeöffnung 7 in die Wärmespeichervorrichtung eingeleitet und in dem Heizerraum 16 mittels der Widerstandsheizelemente 61 erhitzt und dann als Heißluft-Gasstrom über den oberen Gasverteilungsraum 24 und die Entladeöffnung 9 aus der Wärmespeichervorrichtung 60 ausgeleitet.

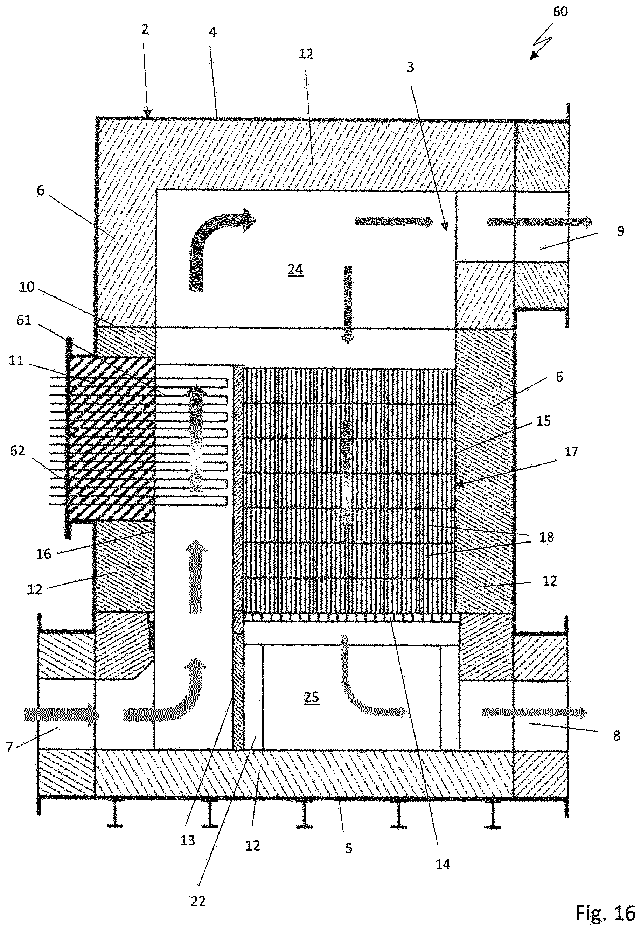

Gemäß Figur 16 kann die beschriebene Wärmespeichervorrichtung 60 auch derart betrieben werden, dass ein Warmluft-Gasstrom über die Beladeöffnung 7 in die Wärmespeichervorrichtung eingeleitet und mittels der Widerstandsheizelemente 61 erhitzt wird. Der resultierende Heißluft-Gasstrom wird in dem oberen Gasverteilungsraum 24 aufgeteilt und einerseits über die Entladeöffnung 9 aus der Wärmespeichervorrichtung 60 ausgeleitet und andererseits zum Beladen des aus den Formsteinen 19 gebildeten Wärmespeichermittels 17 durch dieses geleitet und anschließend über den unteren Gasverteilungsraum 25 und die Ein-/Ausströmöffnung 8 aus der Wärmespeichervorrichtung ausgeleitet.

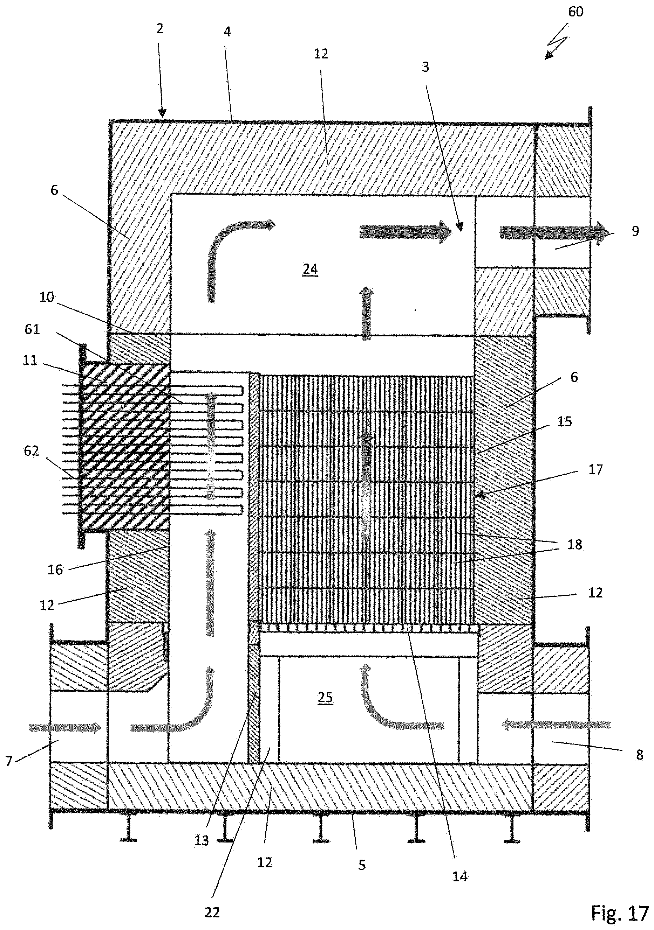

In einem weiteren, in Figur 17 dargestellten Betriebsmodus kann die Wärmespeichervorrichtung 60 so betrieben werden, dass über die Beladeöffnung 7 und die Ein-/Ausströmöffnung 8 jeweils ein Warmluft-Gasstrom eingeleitet wird. Der über die Beladeöffnung 7 eingeleitete Gasstrom wird in dem Heizerraum 16 in vertikaler Richtung nach oben geführt und mittels der Widerstandsheizelemente 61 erhitzt und über den oberen Gasverteilungsraum 24 und die Entladeöffnung 9 ausgeleitet. Der über die Ein-/Ausströmöffnung 8 eingeleitete Warmluft-Gasstrom wird durch das beladene Wärmespeichermittel 17 geleitet und dort durch Wärmeaustausch erhitzt, um anschließend ebenfalls über den oberen Gasverteilungsraum 24 und die Entladeöffnung 9 aus der Wärmespeichervorrichtung ausgeleitet zu werden.

Die genannten Betriebsmodi sind natürlich auch mittels der Wärmespeichervorrichtungen nach den Figuren 1 bis 6 realisierbar.

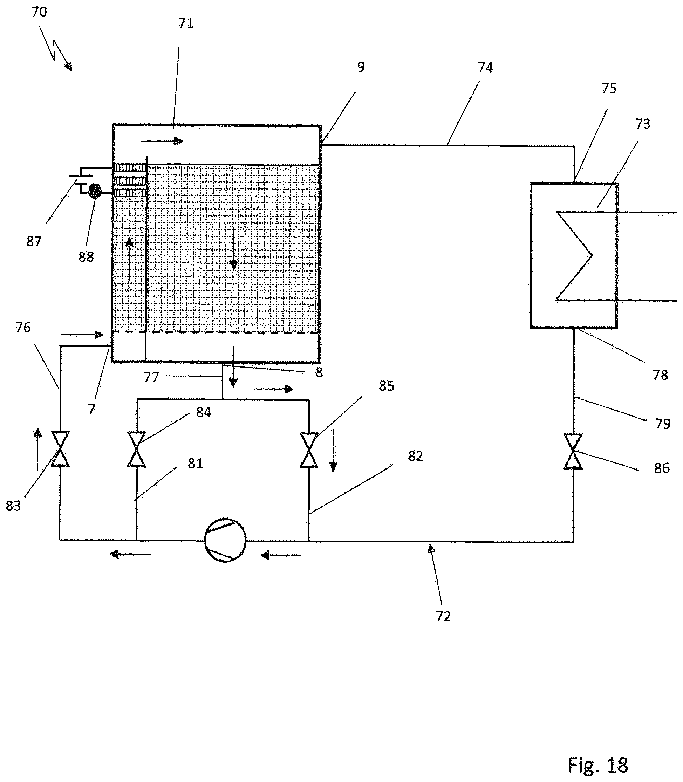

In den Figuren 18 bis 20 ist ein Wärmespeichersystem 70 dargestellt, das eine Wärmespeichervorrichtung 71 aufweist, die entweder gemäß den in den Figuren 1 bis 6 dargestellten Ausführungsformen oder gemäß der in den Figuren 12 bis 17 dargestellten Ausführungsform ausgebildet ist. Zudem umfasst das Wärmespeichersystem 70 eine Leitungsanordnung 72, die mit einem Verbraucher 73 verbunden ist, der beispielsweise als Dampferzeuger eines Kraftwerks ausgebildet sein kann. Die Leitungsanordnung 72 umfasst eine Leitung 74, welche die Entladeöffnung 9 der Wärmespeichervorrichtung 71 mit einem Einlass 75 des Verbrauchers 73 verbindet. Die Beladeöffnung 7 der Wärmespeichervorrichtung 71 ist mit einer Leitung 76 der Leitungsanordnung 72 verbunden, und die Ein-/Ausströmöffnung 8 der Wärmespeichervorrichtung 71 ist mit einer Leitung 77 der Leitungsanordnung 72 verbunden. Ein Auslass 78 des Verbrauchers 73 ist mit einer Leitung 79 verbunden, welche zu einem Gebläse 80 führt, welches wiederum über die Leitung 76 mit der Beladeöffnung 7 der Wärmespeichervorrichtung 71 verbunden ist. Stromab des Gebläses 80 zweigt von der Leitung 76 eine Zweigleitung 81 ab, die mit der Leitung 77 verbunden ist. Stromauf des Gebläses 80 zweigt von der Leitung 79 eine Zweigleitung 82 ab, welche ebenfalls mit der Leitung 77 verbunden ist.

Um das Wärmespeichersystem 70 in verschiedene Betriebsmodi schalten zu können, ist in der Leitung 76 ein Ventil 83 angeordnet, ist in der Zweigleitung 81 ein Ventil 84 angeordnet, ist in der Zweigleitung 82 ein Ventil 85 angeordnet und ist in der Leitung 79 stromauf der Abzweigung der Zweigleitung 82 ein Ventil 86 angeordnet. Statt der Ventile oder zusätzlich zu diesen können natürlich auch andere geeignete Absperrarmaturen, wie Klappen oder dergleichen eingesetzt werden.

Des Weiteren ist die Wärmespeichervorrichtung 71 mit einer Stromquelle 87 verbunden, die von dem Stromnetz oder auch einer Photovoltaikanlage oder auch von einer Windkraftanlage gebildet sein kann und mit einem Schalter 88 versehen ist. In einem Beladebetrieb, in dem elektrische Energie in Wärme umgewandelt wird und die Wärme in dem Wärmespeichermittel 17 der Wärmespeichervorrichtung 71 gespeichert werden soll, wird mittels des Gebläses 80 bei geöffnetem Ventil 83 ein Warmluft-Gasstrom über die Beladeöffnung 7 von unten in den Heizerraum 16 der Wärmespeichervorrichtung 71 eingeleitet. Der Schalter 88 ist geschlossen, so dass die Heizeranordnung betrieben ist und der Gasstrom in dem Heizerraum 16 erhitzt wird. Der erhitzte Gasstrom wird über den oberen Gasverteilungsraum 24 in den Speicherraum 15 geführt und von oben nach unten durch das von dem Wärmespeichermittel 17 gebildete Wärmespeicherbett geleitet, wobei die Wärme an dieses abgegeben und dort gespeichert wird. Anschließend wird ein Warmluft-Gasstrom über die Ein-/Ausströmöffnung 8 aus der Wärmespeichervorrichtung 71 ausgeleitet und über die Leitung 77 und die Zweigleitung 82 zu dem Gebläse 80 geführt, um dann wieder in der vorstehend beschriebenen Weise der Wärmespeichervorrichtung 71 zugeführt werden zu können. Die Ventile 84 und 86 sind in diesem Belademodus geschlossen.

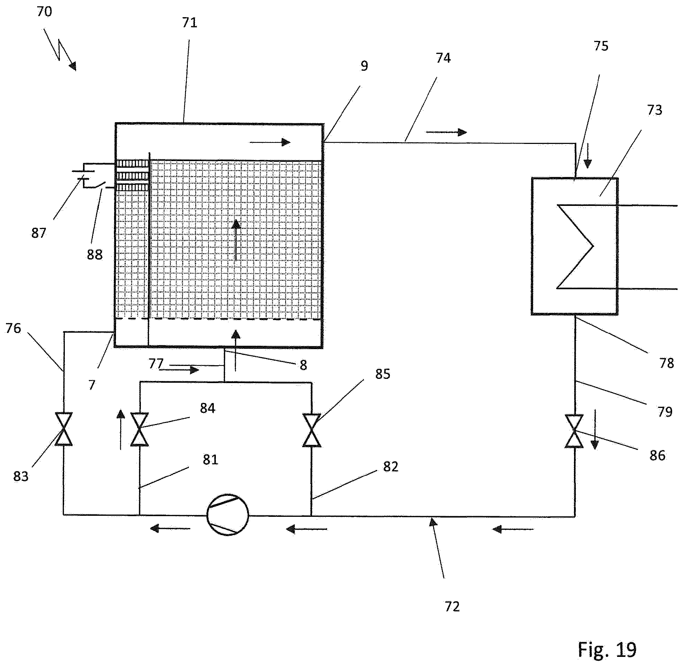

In einem in Figur 19 dargestellten Entlademodus werden die Ventile 84 und 86 geöffnet und Ventile 83 und 85 geschlossen. Mittels des Gebläses 80 wird dann über die Zweigleitung 81 und die Leitung 77 und die Ein-/Ausströmöffnung 8 von unten Warmluft in die Wärmespeichervorrichtung 71 eingeleitet und in dem von dem Wärmespeichermittel 17 gebildeten Speicherbett erhitzt. Der entstandene Heißluftgasstrom wird über die Entladeöffnung 9 oben aus der Wärmespeichervorrichtung 71 ausgeleitet und über die Leitung 74 dem Verbraucher 73 zur Verfügung gestellt. Dieser gibt wiederum Warmluft ab, die mittels des Gebläses 80 in der vorstehend beschriebenen Weise wieder der Wärmespeichervorrichtung 71 zugeführt werden kann.

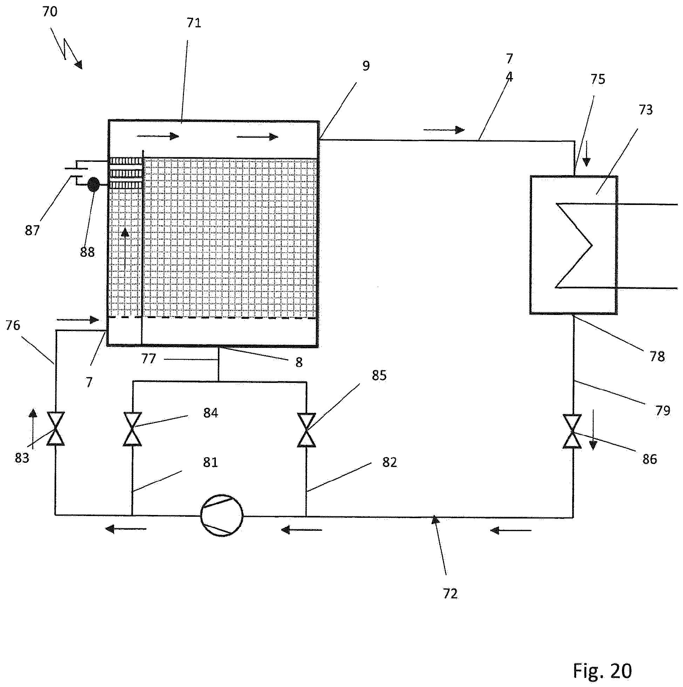

In einem in Figur 20 dargestellten reinen Heizbetrieb sind die Ventile 84 und 85 geschlossen, wohingegen die Ventile 83 und 86 geöffnet sind. Mittels des Gebläses 80 kann dann Warmluft in den Heizerraum 16 der Wärmespeichervorrichtung 71 eingeleitet und dort erhitzt werden. Der resultierende Heißluft-Gasstrom wird über die Entladeöffnung 9 aus der Wärmespeichervorrichtung 71 geführt und dann über die Leitung 74 dem Verbraucher 73 zugeführt. Der Verbraucher 73 gibt wiederum einen Warmluft-Gasstrom ab, der über die Leitung 79 zu dem Gebläse 80 geführt wird und in der vorstehend beschriebenen Weise wieder in die Wärmespeichervorrichtung 71 geleitet werden kann.

Eine nicht näher dargestellte Ausführungsform eines Wärmespeichersystems kann als zumindest teilweise offenes System ausgebildet sein, bei dem die aus dem Verbraucher austretende Luft ganz oder teilweise an die Umgebung abgegeben wird. An der Saugseite des Gebläses wird dann beim Entladen der Wärmespeichervorrichtung in entsprechender Menge Umgebungsluft angesaugt. Im Übrigen kann diese Ausführungsform der oben beschriebenen Ausführungsform entsprechen.

### Bezugszeichenliste

- 1, 1': Wärmespeichervorrichtung
- 2: Behälter
- 3: Innenraum
- 4: Behälterdecke
- 5: Behälterboden
- 6: Seitenwände
- 7: Beladeöffnung
- 8: Ein-/Ausströmöffnung
- 9: Entladeöffnung
- 10: Wartungsöffnung
- 11: Wandelement
- 12: Dämmschicht
- 13, 13': Trennwand
- 14: Gitterstruktur
- 15: Speicherraum
- 16: Heizerraum
- 17: Wärmespeichermittel
- 18: Formsteine
- 19: Formsteine
- 20: Heizanordnung
- 21: Anschlüsse
- 22: Füße
- 23: Ansatz
- 24: Gasverteilungsraum
- 25: Gasverteilungsraum
- 26: Formstein
- 27: Lagen
- 28: Heizeinheit
- 29: Abdeckung
- 30: Formsteine
- 31: Anschlusskontakt
- 32: Anschlusskontakt
- 33: Lagerelement
- 34: Heizeinrichtung
- 35: Bodenplatte
- 36: Seitenwände
- 37: Ausnehmung
- 38: Abdichtung
- 39A, B, C, D,E, F: Heizblecheinheit
- 40: Kontaktblech
- 41: Trennwand
- 42: Seitenwand
- 43: Anschlusselement
- 44: Anschlusselement
- 45: Heizblechstreifen
- 46: Heizblechstreifen
- 47: Abstandshalterstruktur
- 48: Futterblech
- 49: Kontaktblech
- 50: Kontaktstreifen
- 51: Thermoelement
- 60: Wärmespeichervorrichtung
- 61: Widerstandsheizelemente
- 62: Anschlussbereich
- 70: Wärmespeichersystem
- 71: Wärmespeichervorrichtung
- 72: Leitungsanordnung
- 73: Verbraucher
- 74: Leitung
- 75: Einlass
- 76: Leitung
- 77: Leitung
- 78: Auslass
- 79: Leitung
- 80: Gebläse
- 81: Zweigleitung
- 82: Zweigleitung
- 83: Ventil
- 84: Ventil
- 85: Ventil
- 86: Ventil
- 87: Stromquelle
- 88: Schalter
- 261: Lochplatte

## Patentansprüche

1. Heizeinrichtung zum Erhitzen eines Gasstroms, umfassend zwei elektrische Anschlusselemente (43, 44) zur Verbindung mit einer Stromquelle und mindestens eine Heizblecheinheit (39A, 39B, 39C, 39D, 39E, 39F) mit einer Einströmseite und einer Ausströmseite, die eine Vielzahl von Heizblechstreifen (45, 46) umfasst, die in dem Gasstrom liegen und jeweils einen ersten Endbereich und einen zweiten Endbereich aufweisen, wobei benachbarte Heizblechstreifen (45, 46) in den ersten Endbereichen und den zweiten Endbereichen jeweils über eine leitfähige Abstandshalterstruktur (47) miteinander verbunden sind, **dadurch gekennzeichnet, dass** die leitfähige Abstandshalterstruktur (47) Futterbleche (48) umfasst, die zwischen benachbarten Heizblechstreifen (45, 46) angeordnet sind und diese miteinander verbinden.

2. Heizeinrichtung nach Anspruch 1, **dadurch gekennzeichnet, dass** die Heizblechstreifen (45, 46) der Heizblecheinheit (39A, 39B, 39C, 39D, 39E, 39F) abwechselnd strukturiert und eben sind.

3. Heizeinrichtung nach Anspruch 2, **dadurch gekennzeichnet, dass** die strukturierten Heizblechstreifen (45, 46) eine Wellung haben und sich mit ihren Wellenkämmen an mindestens einem benachbarten ebenen Heizblechstreifen (46) abstützen.

4. Heizeinrichtung nach einem der Ansprüche 1 bis 3, **dadurch gekennzeichnet, dass** die Wellung eine Amplitude hat, die der Dicke der Futterbleche (48) entspricht.

5. Heizeinrichtung nach einem der Ansprüche 1 bis 4, **dadurch gekennzeichnet, dass** die Heizblechstreifen (45, 46) und die Futterbleche (48) in den beiden Endbereichen jeweils miteinander verschweißt, verlötet und/oder vernietet sind.

6. Heizeinrichtung nach einem der Ansprüche 1 bis 5, **gekennzeichnet durch** mindestens zwei Heizblecheinheiten (39A, 39B, 39C, 39D, 39E, 39F), zwischen denen eine elektrisch isolierende Trennwand (41) angeordnet ist, die vorzugsweise aus einer Keramik gebildet ist.

7. Heizeinrichtung nach Anspruch 6, **dadurch gekennzeichnet, dass** die beiden Heizblecheinheiten (39A, 39B, 39C, 39D, 39E, 39F) über ein Kontaktblech (40) elektrisch miteinander verbunden sind, wobei das Kontaktblech (40) vorzugsweise stirnseitig an den miteinander verbundenen Heizblecheinheiten (39A, 39B, 39C, 39D, 39E, 39F) anliegt.

8. Heizeinrichtung nach Anspruch 7, **dadurch gekennzeichnet, dass** die Anschlusselemente (43, 44) mit dem Kontaktblech (40) fluchten.

## Claims

1. A heating device for heating a gas stream, the heating device comprising two electric connection elements (43, 44) for being connected to a power source and at least one heating plate unit (39A, 39B, 39C, 39D, 39E, 39F) having an inlet side and an outlet side, which comprises a plurality of heating plate strips (45, 46) which are in the gas stream and each have a first end area and a second end area, adjacent heating plate strips (45, 46) being connected to each other in the first end areas and the second end areas each via a conductive spacer structure (47), **characterized in that** the conductive spacer structure (47) comprises lining plates (48), which are disposed between adjacent heating plate strips (45, 46) and connect these with each other.

2. The heating device according to claim 1, **characterized in that** the heating plate strips (45, 46) of the heating plate unit (39A, 39B, 39C, 39D, 39E, 39F) are alternately structured and plane.

3. The heating device according to claim 2, **characterized in that** the structured heating plate strips (45, 46) have a scallop and rest on at least one adjacent plane heating plate strip (46) with their peaks.

4. The heating device according to any one of the claims 1 to 3, **characterized in that** the scallop has an amplitude corresponding to the thickness of the lining plates (48).

5. The heating device according to any one of the claims 1 to 4, **characterized in that** the heating plate strips (45, 46) and the lining plates (48) are welded, soldered and/or bolted together in the two end areas.

6. The heating device according to any one of the claims 1 to 5, **characterized by** at least two heating plate units (39A, 39B, 39C, 39D, 39E, 39F) between which an electrically insulating divider wall (41), which is preferably made of a ceramic, is disposed.

7. The heating device according to claim 6, **characterized in that** the two heating plate units (39A, 39B, 39C, 39D, 39E, 39F) are electrically connected to each other via a contact plate (40), the contact plate (40) preferably abutting against the interconnected heating plate units (39A, 39B, 39C, 39D, 39E, 39F) at the front.

8. The heating device according to claim 7, **characterized in that** the connection elements (43, 44) align flush with the contact plate (40).

## Revendications

1. Dispositif de chauffage pour le chauffage d'un courant de gaz, le dispositif de chauffage comprenant deux éléments de connexion (43, 44) électriques pour être reliés à une source d'énergie et au moins une unité (39A, 39B, 39C, 39D, 39E, 39F) de plaque de chauffage ayant un côté d'entrée et un côté de sortie, qui comprend une pluralité de lames (45, 46) de plaque de chauffage qui sont dans le courant de gaz et ont chacune une première zone d'extrémité et une deuxième zone d'extrémité, les lames (45, 46) de plaque de chauffage adjacentes étant reliées les unes aux autres dans les premières zones d'extrémité et les deuxièmes zones d'extrémité par l'intermédiaire d'une structure d'entretoise (47) conductrice, la structure d'entretoise (47) conductrice comprenant des plaques de revêtement (48), qui sont disposées entre les lames (45, 46) de plaque de chauffage adjacentes et les relient les unes aux autres.

2. Dispositif de chauffage selon la revendication 1, **caractérisé en ce que** les lames (45, 46) de plaque de chauffage de l'unité (39A, 39B, 39C, 39D, 39E, 39F) de plaque de chauffage sont structurées et planes de manière alternante.

3. Dispositif de chauffage selon la revendication 2, **caractérisé en ce que** les lames (45, 46) de plaque de chauffage structurées sont ondulées et s'appuient sur au moins une lame de plaque de chauffage par leurs crêtes.

4. Dispositif de chauffage selon l'une quelconque des revendications 1 à 3, **caractérisé en ce que** l'ondulation a une amplitude correspondante à l'épaisseur des plaques de revêtement (48).

5. Dispositif de chauffage selon l'une quelconque des revendications 1 à 4, **caractérisé en ce que** les lames (45, 46) de plaque de chauffage et les plaques de revêtement (48) sont soudées, brassées et/ou rivetées dans les deux zones d'extrémités.

6. Dispositif de chauffage selon l'une quelconque des revendications 1 à 5, **caractérisé par** au moins deux unités (39A, 39B, 39C, 39D, 39E, 39F) de plaque de chauffage entre lesquelles une paroi de séparation (41) isolante électriquement est disposée, qui de préférence est fait en céramique.

7. Dispositif de chauffage selon la revendication 6, **caractérisé en ce que** les deux unité (39A, 39B, 39C, 39D, 39E, 39F) de plaque de chauffage sont reliées électriquement l'une à l'autre par une plaque de contact (40), la plaque de contact (40) de préférence s'appuyant aux unités (39A, 39B, 39C, 39D, 39E, 39F) de plaque de chauffage reliées à la face.

8. Dispositif de chauffage selon la revendication 7, **caractérisé en ce que** les éléments de connexion (43, 44) s'alignent à fleur avec la plaque de contact (40).
